# EUROPÄISCHE PATENTANMELDUNG

(11) **EP 2 266 447 A2**
(43) Veröffentlichungstag der Anmeldung: **29.12.2010**
(21) Anmeldenummer: 10164792.3
(22) Anmeldetag: 02.06.2010
(51) Int. Cl.: A47J 43/24

(54) **Schleudervorrichtung für Nahrungsmittel**

(30) Priorität: 05.06.2009 DE 102009024279
(71) Anmelder: Leifheit AG, 56377 Nassau (DE)
(72) Erfinder: Kunkler, Thomas, 56377, Nassau (DE)
(74) Vertreter: Bungartz, Klaus Peter

(57) **Zusammenfassung**

Die Erfindung betrifft eine Schleudervorrichtung (1) zum Trocknen von Nahrungsmitteln mit einem faltbaren Schleuderelement (30), das innerhalb der Aufnahmeeinheit (10) angeordnet werden kann. Das faltbare Schleuderelement (30) wird mittels einer Antriebseinheit (4) gedreht.

Die bekannten faltbaren Schleudervorrichtungen, bei denen sowohl das Schleuderelement als auch die Aufnahmeeinheit faltbar ist, haben Nachteil, dass die Platzersparnis nicht optimal ist und mit der Aufnahmeeinheit eine weitere Schüssel benötigt wird.

Dies vermeidet die neue Schleudervorrichtung (1) dadurch, dass das Schleuderelement (30) über ein in eine Aufnahmeeinheit abnehmbar einsetzbares Traglager (20) drehbar getragen ist, wobei das Schleuderelement über ein Koppelelement mit der Antriebseinheit (4) zur Übertragung der Drehbewegung der Antriebseinheit auf das Schleuderelement (30) verbunden ist.

## Beschreibung

### Technisches Gebiet

Die Erfindung betrifft eine Schleudervorrichtung zum Schleudern von Nahrungsmitteln mit einem insbesondere korbartigen Schleuderelement, das innerhalb einer Aufnahmeeinheit angeordnet werden kann und eine Antriebseinheit, die mit dem Schleuderelement koppelbar ist und/oder gekoppelt aufweist.

### Stand der Technik

Nahrungsmittel, wie beispielsweise Salat, Kräuter, Gemüse und/ oder Früchte, müssen vor dem Verzehr gewaschen werden. Dabei wird das zum Waschen der Nahrungsmittel zugegebene Wasser vor einer Zugabe von weiteren Zutaten, wie von beispielsweise Dressing in einen Salat, entfernt. Dabei kommt es regelmäßig vor, dass das zum Waschen des Salats zugegebene Wasser von den Salatblättern nicht vollständig entfernt werden kann, so dass sich das zugegebene Dressing mit dem auf den Salatblättern befindlichen Wasser vermischt. Im Ergebnis wird das Dressing verwässert, wodurch sich der Geschmack des Dressings verschlechtert.

Um dieses Problem zu vermeiden, sind aus dem Stand der Technik Schleudervorrichtungen, insbesondere also genannte Salatschleudern bekannt. Die Schleudervorrichtungen werden zum Trocknen der Nahrungsmittel eingesetzt, indem ein Schleuderelement in Form eines siebartigen Korbes, in dem sich die Nahrungsmittel befinden, gedreht wird. Durch das Drehen des Schleuderelements wird mittels der auf die Nahrungsmittel und das Wasser wirkenden Zentrifugalkraft bewirkt, dass die Nahrungsmittel und das Wasser gegen die Wand des Schleuderelements gedrückt werden. Über in der Wand des Schleuderelements befindliche Löcher kann das gegen die Wand gedrückte Wasser aus dem Schleuderelement austreten. Das aus dem Schleuderelement ausgetretene Wasser sammelt sich unterhalb des Schleuderelements in einer Aufnahmeeinheit der Schleudervorrichtung.

Aus DE 20 2004 016 636 U1 ist eine Salatschleuder bekannt, die eine Schüssel und einen starren drehbaren Schleuderkorb aufweist, der innerhalb der Schüssel angeordnet ist. Zusätzlich weist die Salatschleuder einen Deckel auf, in dem ein Antriebsdrehteller angeordnet ist. Der Antriebsdrehteller ist mit dem Schleuderkorb verbunden und überträgt die von einer Antriebseinheit erzeugte Drehung auf den Schleuderkorb.

Die bekannte Salatschleuder weist den Nachteil auf, dass sie aus großen Bauteilen besteht, die bei einer Aufbewahrung - beispielsweise im Küchenschrank - einen entsprechend großen Platz einnehmen.

Ausder DE 20 2008 017 009 U1 wiederum ist eine Salatschleuder bekannt, die eine faltbare Aufnahmeeinheit und eine faltbare Schleudereinheit aufweist. Diese Salatschleuder ermöglicht es, den Platzbedarf innerhalb des Küchenschrankes zu reduzieren, allerdings sind hier, wie auch bei den klassischen, aus der DE 20 2004 016 636 U1 bekannten Salatschleudern, die Aufnahmeeinheit und das Schleuderelement eine Einheit, so dass zum einen das Maß, auf das die Kombination zusammengelegt werden kann, immer noch vergleichsweise groß ist und zum anderen das Lebensmittel nachdem Trocknen in eine Servierschüssel umgefüllt werden muss, da die Salatschleuder als solche sich aufgrund der siebartigen Aufnahmeeinheit weder technisch noch optisch als Servierschüssel eignet.

### Kurzbeschreibung der Erfindung

Es ist daher Aufgabe der vorliegenden Erfindung, eine Schleudervorrichtung bereitzustellen, die für die Aufbewahrung im Küchenschrank möglichst wenig Platz benötigt in eine beliebige Aufnahmeeinheit eingesetzt und nach dem Schleudervorgang wieder entnommen werden kann.

Die Aufgabe wird erfindungsgemäß durch den Gegenstand des Patentanspruchs 1 gelöst. Vorteilhafte Ausgestaltungen der Erfindung sind in den Unteransprüchen gekennzeichnet.

Die Erfindung hat den Vorteil, dass das Schleuderelement der Schleudervorrichtung aus einem faltbaren und/oder zusammenschiebbaren und/oder zusammenlegbaren Material bzw. Konstruktion besteht. Das heißt, dass nach einer Benutzung der Schleudervorrichtung das Schleuderelement in einem zusammengefalteten Zustand im Küchenschrank aufbewahrt werden kann. Das zusammengefaltete Schleuderelement benötigt einen wesentlich geringen Platz für die Aufbewahrung als ein aus einem starren Material bestehendes Schleuderelement.

Ein wesentlicher weiterer Vorteil der Erfindung besteht darin, dass die Schleudervorrichtung nun nicht mehr die Aufnahmeeinheit beinhaltet sondern vielmehr in beliebige Gefäße einsetzbar ist. Dies können Schüsseln oder Spülbecken sein, so dass zum einen keine Aufnahmeeinheit mehr zusätzlich gereinigt werden muss und beispielsweise die spätere Salatschüssel als Aufnahmeeinheit genutzt werden kann. Dies reduziert nicht nur die Teilezahl und den Spülaufwand sondern auch den benötigten Platz, da die Aufnahmeeinheit nicht mehr gefaltet werden muss und dadurch die Schleudereinheit noch flacher zusammengelegt werden kann.

Lediglich bei einer besonderen Ausführung ist vorgesehen, dass die Schleudervorrichtung eine eigene Aufnahmeeinheit, die insbesondere ebenfalls teleskopartig und/oder faltenbalgartig faltbar und/oder zusammenschiebbar und/oder zusammenlegbar ausgebildet sein kann.

Ferner besteht ein weiterer vorteilhafter Gedanke der Erfindung darin, dass durch das Vorsehen eines abnehmbaren Tragelagers an der Aufnahmeeinheit, das Traglager nach einem Benutzen der Schleudervorrichtung von der Aufnahmeeinheit entfernt werden kann. So kann die Schüssel nach einem Waschen der Lebensmittel zum Servieren der Lebensmittel verwendet werden, ohne dass das zum Tragen des Schleuderelements benötigte Traglager die ästhetische Gestaltung der Schüssel beeinträchtigt.

Das Traglager ist bevorzugt so ausgestaltet, dass es auf jeder Fläche lösbar, aber fest gehalten sein kann. Eine mögliche Ausgestaltung ist zum Beispiel ein Saugnapf, der auf jeder glatten Fläche befestigt werden kann. Das Traglager lagert die Schleudereinheit so, dass diese um eine Rotationsachse drehbar ist und bietet bevorzugt gleichzeitig das Widerlager für die Antriebseinheit, die bevorzugt innerhalb des Schleuderelements angeordnet ist und mit einem äußeren Bedienbereich aus diesem oben herausragt. Um ein Herausspritzen von Flüssigkeit oder ein Herausfliegen von Nahrungsmitteln zu vermeiden, kann ein oberer Deckel vorgesehen sein, der die korbartige Schleudereinheit so abschließt, dass die Antriebseinheit mit der Bedieneinheit nach oben herausragen kann.

Zusätzlich besteht eine weitere vorteilhafte Ausgestaltung der Erfindung darin, dass durch ein Vorsehen eines Koppelelements an dem Schleuderelement, das mit der Antriebseinheit gekoppelt ist, eine einfache Übertragung einer Drehbewegung der Antriebseinheit auf das Schleuderelement bewirkt wird. So kann insbesondere auf einen Antriebsdrehteller zur Übertragung der Drehbewegung verzichtet werden. Im Ergebnis verringert sich die Anzahl der für die Übertragung der Drehbewegung benötigten Bauteile. Folglich kann, aufgrund der einfachen Kopplung der Antriebseinheit mit dem Schleuderelement und der dafür benötigten kleinen Anzahl an Bauteilen, die Schleudervorrichtung schnell und einfach gereinigt werden.

Das Traglager ist so ausgebildet, dass für die Antriebseinheit das notwendige Widerlager bildet, so dass die Rotationsbewegung der Schleudereinheit durch Übertragung der Antriebskraft von der Antriebseinheit auf die Schleudereinheit bewirkt werden kann.

### Kurze Beschreibung der Zeichnungsfiguren

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:

Fig. 1 zeigt eine Querschnittsansicht einer Schleudervorrichtung in einer ersten Ausführungsform,

Fig. 2 zeigt eine Querschnittsansicht einer Schleudervorrichtung in einer zweiten Ausführungsform.

### Beschreibung der Ausführungsarten

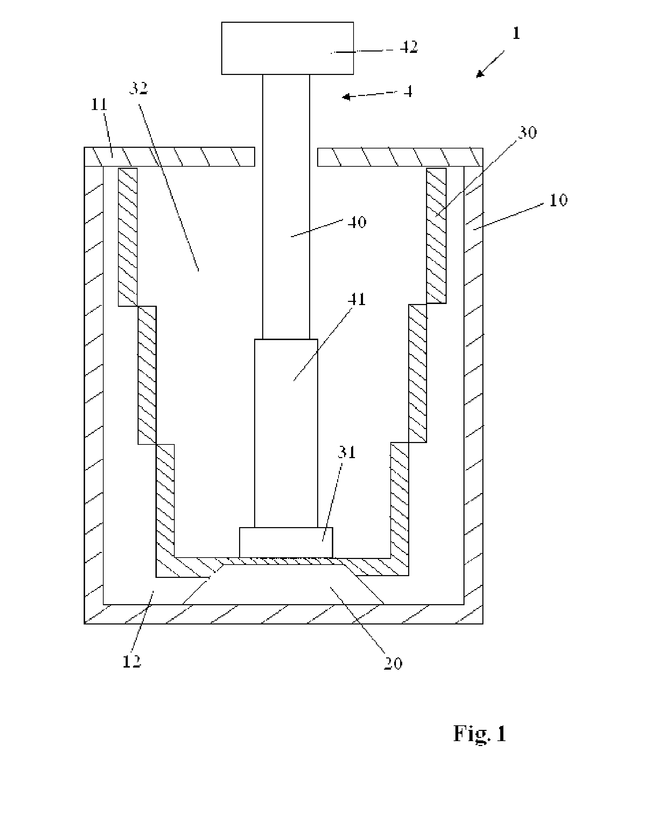

Die in Fig. 1 gezeigte Schleudervorrichtung 1 weist eine Aufnahmeeinheit 10, ein innerhalb der Aufnahmeeinheit 10 angeordnetes Schleuderelement 30 und einen Deckel 11, der die Aufnahmeeinheit 10 und das Schleuderelement 30 abschließt, auf. Zusätzlich weist die Schleudervorrichtung 1 eine Antriebseinheit 4 auf, die mit dem Schleuderelement 30 koppelbar ist.

Das in Fig. 1 gezeigte Schleuderelement 30 befindet sich in einem ausgefalteten Zustand und ist teleskopförmig ausgebildet. Innerhalb eines Hohlraums 32 des Schleuderelements 30 werden die zu waschenden Nahrungsmittel gelegt. In der Wand des Schleuderelements 30 sind eine Vielzahl von Löchern angeordnet, durch die bei einem Drehen des Schleuderelements 30 das auf den Nahrungsmitteln befindliche Wasser aus dem Schleuderelement 30 austreten kann. Das Schleuderelement 30 besteht aus einem biegbaren Material, wie beispielsweise Silikon, das ermöglicht, dass das Schleuderelement einen zusammengefalteten als auch einen in Fig. 1 gezeigten auseinandergefalteten Zustand einnehmen kann.

Das Schleuderelement 30 weist an seinem von dem Deckel 11 entfernten Ende an seiner zum Boden der Aufnahmeeinheit 10 weisenden Seite eine Aussparung auf. Die Aussparung dient zur Aufnahme eines an der Aufnahmeeinheit 10 angeordneten Trageelements 20. Das Trageelement 20 dient zum drehbaren Tragen des Schleuderelements 30 innerhalb der Aufnahmeeinheit 10 und ist beispielsweise als Saugnapf ausgebildet. Durch die Verwendung eines Saugnapfs als Trageelement 20 ist sichergestellt, dass nach einem Trocknen der Nahrungsmittel durch das Schleuderelement 30, der Saugnapf von der Aufnahmeeinheit 10 getrennt werden kann.

Durch die Anordnung des Schleuderelements 30 auf dem Trageelement 20 bildet sich zwischen den dem Deckel 11 jeweils entfernten Enden des Schleuderelements 30 und der Aufnahmeeinheit 10 ein Aufnahmeraum 12 aus. Im Aufnahmeraum 12 wird das beim Drehen des Schleuderelements 30 von den Nahrungsmitteln über die Löcher des Schleuderelements 30 ausgetretene Wasser gesammelt. Dabei wird die Abmessung des Trageelements 20 derart gewählt, dass sich zwischen dem Schleuderelement 30 und der Aufnahmeeinheit 10 ein ausreichend großer Aufnahmeraum 12 ausbilden kann, so dass sichergestellt ist, dass die in dem Hohlraum 32 des Schleuderelements 30 befindlichen Nahrungsmittel nicht mit dem im Aufnahmeraum 12 befindlichem Wasser benetzt werden.

Zusätzlich weist das Schleuderelement 30 an seinem von dem Deckel 11 entfernten an seiner vom Boden abgewandten Seite ein Koppelelement 31 auf. Das Koppelelement 31 des Schleuderelements 30 kann mit der Antriebseinheit 4 gekoppelt werden, so dass eine Drehung der Antriebseinheit 4 auf das Schleuderelement 30 übertragen wird.

Die Antriebseinheit 4 weist eine Spindel 40, ein Übertragungselement 41, das beispielsweise als Spindelmutter 41 ausgebildet ist und im Folgenden derart bezeichnet wird, und einen Handgriff 42 auf. In einem gekoppelten Zustand ist die Spindelmutter 41 mit dem Koppelelement 31 gekoppelt, so dass die Drehbewegung der Spindelmutter 41 auf das Koppelelement 31 und somit auf das Schleuderelement 30 übertragen wird. Die Spindelmutter 41 ist auf ihrem dem Koppelement 31 entfernten Ende mit einem Gewinde der Spindel 40 gekoppelt. Durch eine translatorische Bewegung der Spindel 40 wird eine Drehbewegung der Spindelmutter 41 erzeugt. Die Spindel 40 geht durch eine Öffnung des Deckels 11 und ragt aus diesem heraus und weist an ihrem aus dem Deckel 11 herausragenden Ende den Handgriff 42 auf.

Die Aufnahmeeinheit 10 ist in dieser Ausführungsform als eine Schüssel ausgebildet. Die Schüssel kann vorzugsweise aus Glas oder Metall oder Kunststoff, wie beispielsweise Silikon, aber auch aus einem anderen Material bestehen. So kann die Schüssel analog zu dem Schleuderelement aus einem biegsamen faltbaren Material bestehen, so dass sie nach der Benutzung der Schleudervorrichtung bzw. nach einem Servieren der Nahrungsmittel zusammengefaltet werden kann und somit weniger Raum zum Aufbewahren benötigt.

In einer anderen, in Fig. 1 nicht gezeigten Ausführungsform, ist die Aufnahmeeinheit 10 als Waschbecken ausgebildet. Das Trageelement wird in diesem Fall an einem Waschbeckenboden angebracht. Das Schleuderelement wird durch eine Antriebseinheit, die der in Fig. 1 beschriebenen entspricht, angetrieben. Durch einen Deckel, der auf das Waschbecken gesetzt wird, wird verhindert, dass das aus dem Schleuderelement geschleuderte Wasser aus dem Waschbecken austreten kann. Anzumerken ist, dass bis auf die Aufnahmeeinheit alle weiteren Bauteile den in Fig. 1 gezeigten Bauteilen der ersten Ausführungsform entsprechen.

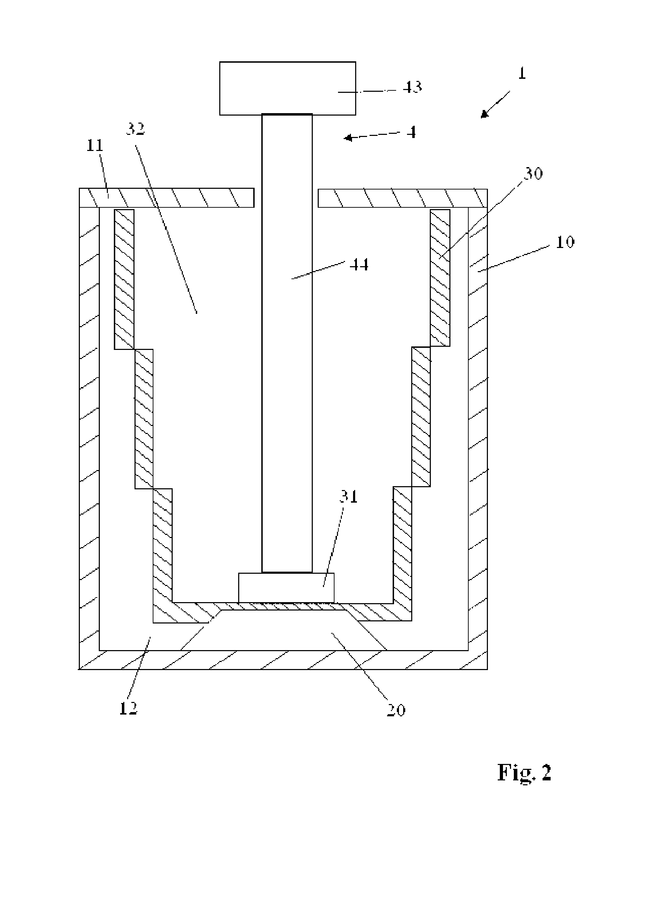

Figur 2 zeigt eine Querschnittsansicht der Schleudervorrichtung 1 in einer zweiten Ausführungsform. Die in Fig. 2 gezeigte zweite Ausführungsform unterscheidet sich von der in Fig. 1 gezeigten ersten Ausführungsform nur durch die Ausbildung der Antriebseinheit 4.

Genauer gesagt weist die in Fig. 2 gezeigte Antriebseinheit 4 ein Antriebselement 43 und ein Drehübertragungselement 44 auf. Das Drehübertragungselement 44 ist mit dem Koppelelement 31 des Schleuderelements 30 gekoppelt und überträgt die vom Antriebselement 43 erzeugte Drehbewegung auf das Schleuderelement 30. Das Antriebselement 43 kann beispielsweise als eine Kurbel oder eine Ratsche ausgebildet sein und ragt aus dem Deckel 11 jeweils heraus.

In einer anderen Ausführungsform kann das Antriebselement 43 als ein Seilzug oder eine aufziehbare Feder ausgebildet sein. In diesen Fällen ragt ein Handgriff ebenfalls aus dem Deckel heraus. Jedoch sind bei diesen Antriebselementen deren weitere Komponenten, wie beispielsweise eine Seiltrommel, ein Zugseil oder eine aufziehbare Feder, in einem Bereich zwischen dem Deckel und dem Schleuderelement, beispielsweise am Deckel angeordnet.

Die Benutzung der oben beschriebenen Schleudervorrichtungen 1 erfolgt wie folgt. Die Nahrungsmittel werden in den Hohlraum 32 des Schleuderelements 30 gelegt. Anschließend wird der Schleudervorrichtung 1 zum Waschen der Nahrungsmittel Wasser zugeführt. Nachdem die Nahrungsmittel gewaschen wurden, wird das Wasser ausgeschüttet und der Deckel 11 verschlossen. Ein Trocknen der Nahrungsmittel erfolgt, indem die Antriebseinheit 4 betätigt wird. Dabei wird eine durch die Antriebseinheit 4 erzeugte Drehung auf das Schleuderelement 30 übertragen.

Die in dem Schleuderelement 30 befindlichen Nahrungsmittel werden mit dem Schleuderelement 30 ebenfalls mitgedreht, so dass im Endeffekt das an den Nahrungsmitteln befindliche Wasser über die in der Wand des Schleuderelements 30 befindlichen Löcher aus dem Schleuderelement 30 austritt. Dieses ausgetretene Wasser sammelt sich im Aufnahmeraum 12 der Aufnahmeeinheit 10. Im nächsten Schritt wird der Deckel 11 abgenommen und das Schleuderelement 30 aus der Aufnahmeeinheit 10 herausgenommen. Des Weiteren wird das in der Aufnahmeeinheit 10 befindliche Wasser ausgeschüttet, das Trageelement 20 von der Aufnahmeeinheit 10 entfernt und die Aufnahmeeinheit 10 gereinigt. Im Anschluss daran können die trockenen Nahrungsmittel in die Aufnahmeeinheit 10 gegeben und somit mittels der Aufnahmeeinheit 10 serviert werden.

### Liste der Bezugszeichen

1 Schleudervorrichtung

10 Aufnahmeeinheit

11 Deckel

12 Aufnahmeraum

20 Trageelement

30 Schleuderelement

31 Koppelelement

32 Hohlraum

4 Antriebseinheit

40 Spindel

41 Übertragungselement/ Spindelmutter

42 Handgriff

43 Antriebselement

44 Drehübertragungselement

## Patentansprüche

1. Schleudervorrichtung (1) zum Schleudern von Nahrungsmitteln mit einem faltbaren und/oder zusammenschiebbaren und/oder zusammenlegbaren, korbartigen Schleuderelement (30), das dafür eingerichtet ist, innerhalb einer Aufnahmeeinheit (10) angeordnet zu werden, und mit einer Antriebseinheit (4) zum Antreiben der Schleudervorrichtung, **dadurch gekennzeichnet, dass** das Schleuderelement (30) über ein Traglager (20) drehbar gelagert ist, das in eine, insbesondere von einer Schüssel oder einem Spülbecken gebildeten Aufnahmeeinheit lösbar einsetzbar ist, wobei das Schleuderelement über ein Koppelelement mit der Antriebseinheit (4) zur Übertragung der Drehbewegung der Antriebseinheit auf das Schleuderelement (30) verbunden ist.

2. Schleudervorrichtung (1) nach Anspruch 1, **dadurch gekennzeichnet, dass** das Schleuderelement (30) teleskopartig und/oder faltenbalgartig faltbar und/oder zusammenschiebbar und/oder zusammenlegbar ist.

3. Schleudervorrichtung (1) nach Anspruch 1 oder 2, **dadurch gekennzeichnet, dass** die Schleudervorrichtung (1) zum Abschließen der Aufnahmeeinheit (10) und des Schleuderelements (30) einen Deckel (11) aufweist, der eine Öffnung aufweist, durch die die Antriebseinheit (4) mit einer äußeren Betätigungsvorrichtung, insbesondere einer manuellen Handhabe hindurch ragt.

4. Schleudervorrichtung (1) nach einem der vorhergehenden Ansprüche, **dadurch gekennzeichnet, dass** das Trageelement (20) als Saugnapf ausgebildet ist.

5. Schleudervorrichtung (1) nach einem der vorhergehenden Ansprüche, **dadurch gekennzeichnet, dass** das Schleuderelement (30) als insbesondere flexibler Korb ausgebildet ist.

6. Schleudervorrichtung (1) nach einem der vorhergehenden Ansprüche, **dadurch gekennzeichnet, dass** das Schleuderelement (30) zumindest teilweise aus einem elastischen Material, insbesondere aus Gummi oder Silikon, hergestellt ist.

7. Schleudervorrichtung (1) nach einem der vorhergehenden Ansprüche, **dadurch gekennzeichnet, dass** die Antriebseinheit als Spindelantrieb und/oder als Seilzugantrieb und/oder als Kurbelantrieb und/oder als Federwerkantrieb ausgebildet ist.

8. Schleudervorrichtung (1) nach einem der vorhergehenden Ansprüche, **dadurch gekennzeichnet, dass** die Antriebseinheit (4) ein Übertragungselement (41), das mit dem Schleuderelement (30) koppelbar ist, und eine Spindel (40) aufweist, wobei das Übertragungselement (41) durch die Spindel (40) antreibbar ist.

9. Schleudervorrichtung (1) nach einem der der vorhergehenden Ansprüche,
**dadurch gekennzeichnet, dass** die Antriebseinheit (4) ein Drehübertragungselement (44), das mit dem Schleuderelement (30) koppelbar ist, und einen Seilzug aufweist, wobei das Drehübertragungselement (44) durch den Seilzug antreibbar ist.

10. Schleudervorrichtung (1) nach einem der Ansprüche 1 bis 8, **dadurch gekennzeichnet, dass** die Antriebseinheit (4) ein Drehübertragungselement (44), das mit dem Schleuderelement (30) koppelbar ist, und eine Kurbel aufweist, wobei das Drehübertragungselement (44) durch die Kurbel antreibbar ist.

11. Schleudervorrichtung (1) nach einem der Ansprüche 1 bis 8, **dadurch gekennzeichnet, dass** die Antriebseinheit (4) ein Drehübertragungselement (44), das mit dem Schleuderelement (30) koppelbar ist, und eine Ratsche aufweist, wobei das Drehübertragungselement (44) durch die Ratsche antreibbar ist.

12. Schleudervorrichtung (1) nach einem der Ansprüche 1 bis 8, **dadurch gekennzeichnet, dass** die Antriebseinheit (4) ein Drehübertragungselement (44), das mit dem Schleuderelement (30) koppelbar ist, und ein aufziehbares Federwerk aufweist, wobei das Drehübertragungselement (44) durch das aufziehbare Federwerk antreibbar ist.

13. Schleudervorrichtung (1) nach einem der vorhergehenden Ansprüche, **dadurch gekennzeichnet, dass** die Schleudervorrichtung (1) zur Verwendung in einer Schüssel oder in einem Waschbecken ausgebildet ist.

14. Schleudervorrichtung (1) nach einem der vorhergehenden Ansprüche, **dadurch gekennzeichnet, dass** sie zusätzlich eine als Schüssel oder als Waschbecken ausgebildete Aufnahmeeinheit (10) aufweist.
